(19) Europäisches Patentamt

European Patent Office

Office européen des brevets

(11) EP 1 059 265 A2

## (12) EUROPEAN PATENT APPLICATION

(43) Date of publication:
13.12.2000 Bulletin 2000/50

(51) Int. Cl.[7]: C01B 3/58

(21) Application number: 00304864.2

(22) Date of filing: 08.06.2000

(84) Designated Contracting States:
AT BE CH CY DE DK ES FI FR GB GR IE IT LI LU MC NL PT SE
Designated Extension States:
AL LT LV MK RO SI

(30) Priority: 11.06.1999 JP 16597399

(71) Applicant:
Matsushita Electric Industrial Co., Ltd.
Kadoma-shi, Osaka 571-8501 (JP)

(72) Inventors:
• Taguchi, Kiyoshi
  Moriguchi-shi, Osaka 570-0008 (JP)
• Tomizawa, Takeshi
  Ikoma-shi, Nara 630-0123 (JP)
• Ukai, Kunihiro
  Ikoma-shi, Nara 630-0213 (JP)
• Maenishi, Akira
  Toyonaka-shi, Osaka 565-0085 (JP)
• Shono, Toshiyuki
  Soraku-gun, Kyoto 619-0237 (JP)
• Kitagawa, Kouichiro
  Kadoma-shi, Osaka 571-0064 (JP)

(74) Representative:
Price, Paul Anthony King et al
D. Young & Co.,
21 New Fetter Lane
London EC4A 1DA (GB)

### (54) Hydrogen purifying apparatus

(57) The present invention provides a hydrogen purifying apparatus capable of stable removal of carbon monoxide from a reformed gas containing hydrogen as a major component and carbon monoxide. The hydrogen purifying apparatus comprises a reaction chamber, a reformed gas supplying unit for supplying the reformed gas into the reaction chamber, an oxidant gas supplying unit for mixing an oxidant gas with the reformed gas, a first catalyst layer through which a mixed gas of the reformed gas and the oxidant gas passes, and a second catalyst layer through which the mixed gas having passed through the first catalyst layer passes.

F I G. 1

**Description**

BACKGROUND OF THE INVENTION

The present invention relates to a hydrogen purifying apparatus for removing carbon monoxide (hereinafter referred to as "CO") from a reformed gas containing hydrogen and CO. The purified gas is used, for example, as a fuel for fuel cells.

Reformed gases are produced by reforming hydrocarbon type fuels such as methane, propane, gasoline and kerosine, alcohol type fuels such as methanol, or ether type fuels such as dimethylether. Specifically, these fuels are mixed with steam (water vapor) and then brought into contact with a heated catalyst to produce reformed gases.

In general, the reforming temperature for hydrocarbon type fuels ranges between 500 to 800°C, and for alcohol type fuels and ether type fuels between 200 to 400°C.

Reformed gas is mainly composed of hydrogen, and other components such as CO. As the reforming temperature rises, the concentration of CO grows higher. In the case of using hydrocarbon type fuels, in particular, the CO concentration grows up to about 10 vol%. For this reason, the CO concentration is lowered to thousands of ppm to several vol% by reacting CO with hydrogen using a catalyst.

Fuel cells for vehicle or domestic use such as solid polymer type fuel cells, however, operate at low temperatures not higher than 100°C. In the case of such fuel cells, the CO concentration of a reformed gas needs to be lowered to 100 ppm or lower, preferably 10 ppm or lower before being supplied to the fuel cell. This is because Pt used in the electrodes of such a fuel cell as a catalyst is poisoned with CO contained in the reformed gas. For this reason, it is a practice to provide a fuel cell with a hydrogen purifying apparatus having a catalyst so as to methanate CO or selectively oxidize CO thereby removing CO from the reformed gas.

Pt is effective as a catalyst in selectively oxidizing CO. However, the temperature range allowing effective oxidation of CO is only tens of degrees in centigrade. This requires accurate temperature control in selective oxidation of CO using Pt. The oxidation of CO, however, generates a large amount of heat and hence makes the temperature control difficult.

Ru, Ni and Rh are effective for catalysts in methanation of CO. These catalysts, however, facilitate methanation of not only CO but also $CO_2$. The temperature range allowing selective methanation of CO while inhibiting methanation of $CO_2$ is only tens of degrees in centigrade.

Thus, prior art hydrogen purifying apparatus have a problem of a limited temperature range for effective removal of CO. Besides, it is difficult to maintain the temperature of a catalyst within this limited range. The temperature control of a catalyst used in a hydrogen purifying apparatus provided for a vehicle- or domestic-use fuel cell, in particular, is extremely difficult since such a fuel cell is subjected to great load changes due to the repetition of starting-up and stopping.

BRIEF SUMMARY OF THE INVENTION

There is a need to reduce the above mentioned problems of the prior art hydrogen purifying apparatus and to provide a hydrogen purifying apparatus which is capable of reducing the CO concentration of a reformed gas to several ppm within a wider temperature range.

Specifically, the present invention provides a hydrogen purifying apparatus for removing carbon monoxide from a reformed gas containing hydrogen and carbon monoxide, comprising a reaction chamber, a reformed gas supplying unit for supplying the reformed gas into the reaction chamber, an oxidant gas supplying unit for mixing an oxidant gas with the reformed gas, a first catalyst layer through which a mixed gas of the reformed gas and oxidant gas passes, and a second catalyst layer through which the mixed gas having passed through the first catalyst layer passes.

The first catalyst layer and the second catalyst layer may be provided in the reaction chamber.

Preferably, the catalyst of the first catalyst layer comprises at least one selected from the group consisting of Pt and Pd, and the catalyst of the second catalyst layer comprises at least one selected from the group consisting of Ru, Rh and Ni.

More preferably, the carrier of the first catalyst layer comprises at least one selected from the group consisting of $Al_2O_3$ and zeolite, and the carrier of the second catalyst layer comprises at least one selected from the group consisting of $Al_2O_3$, $SiO_2$, $SiO_2$-$Al_2O_3$, MgO, $TiO_2$ and zeolite.

At least one of the first catalyst layer and the second catalyst layer preferably comprises a catalyst, a carrier of the catalyst and a substrate having the catalyst and the carrier thereon, the substrate being one in the form of honeycomb or foamed one with communicating pores. Preferably, such a substrate is made of a metal or an inorganic material having high thermal conductivity.

It is also preferable that a certain space is provided between the first catalyst layer and the second catalyst layer. In this case, the certain space may preferably accommodate a heat-dissipating means or a cooling means therein.

The first catalyst layer may comprise a plurality of layers. In this case, the hydrogen purifying apparatus is preferably provided with an oxidant gas supplying unit for supplying oxidant gas to each of these layers.

The first catalyst layer and the second catalyst layer may be integrated into one unit using a substrate in the form of honeycomb or a foamed substrate with communicating pores.

While the novel features of the invention are set forth particularly in the appended claims, the invention, both as to organization and content, will be better understood and appreciated, along with other objects and features thereof, from the following detailed description.

BRIEF DESCRIPTION OF THE DRAWINGS

Fig. 1 is a schematic view illustrating the configuration of a hydrogen purifying apparatus in accordance with EMBODIMENT 1 of the present invention.

Fig. 2 is a graphic description showing respective characteristics of the first catalyst layer and the second catalyst layer in a CO removing catalyst layer used in the hydrogen purifying apparatus in accordance with EMBODIMENT 1 of the present invention.

Fig. 3 is a schematic view illustrating the configuration of a hydrogen purifying apparatus in accordance with EMBODIMENT 2 of the present invention.

Fig. 4 is a schematic view illustrating the configuration of a hydrogen purifying apparatus in accordance with EMBODIMENT 3 of the present invention.

DETAILED DESCRIPTION OF THE PREFERRED EMBODIMENTS

A hydrogen purifying apparatus in accordance with the present invention has a reaction chamber for removing CO. To the reaction chamber is supplied a reformed gas containing hydrogen and CO from a reformed gas supplying unit. Oxidant gas supplied from an oxidant gas supplying unit is mixed with the reformed gas. Subsequently, the mixed gas passes through a CO removing catalyst layer comprising a first catalyst layer and a second catalyst layer.

The first catalyst layer includes a catalyst facilitating the reaction of CO with oxidant gas. On the other hand, the second catalyst layer includes a catalyst facilitating the reaction of CO with hydrogen. Accordingly, the reaction of CO with oxidant gas occurs predominantly at the first catalyst layer to remove CO from the reformed gas. The second catalyst layer predominantly catalyzes the reaction of CO with hydrogen to remove CO remaining in the reformed gas having passed through the first catalyst layer.

The CO concentration of the reformed gas to be purified by the hydrogen purifying apparatus of the present invention is previously lowered to thousands of ppm to several vol%.

The composition of the reformed gas to be purified depends on the kind of starting fuels and the reforming method. The reformed gas generally comprises 40 to 80 vol% of hydrogen, 8 to 25 vol% of carbon dioxide and 0.1 to 2 vol% of CO, without accounting the content of water vapor.

For example, when methane is reformed with water vapor, the resulting reformed gas comprises about 80 vol% of hydrogen. 18 to 20 vol% of carbon dioxide and thousands of ppm to 1 vol% of CO. When an alcohol or ether type fuel is reformed at a low temperature, the CO concentration of the reformed gas may be about 1 vol% just after the reforming.

The merits of the hydrogen purifying apparatus of the present invention, however, are obtained in variations of the compositions of the reformed gases.

EMBODIMENT 1

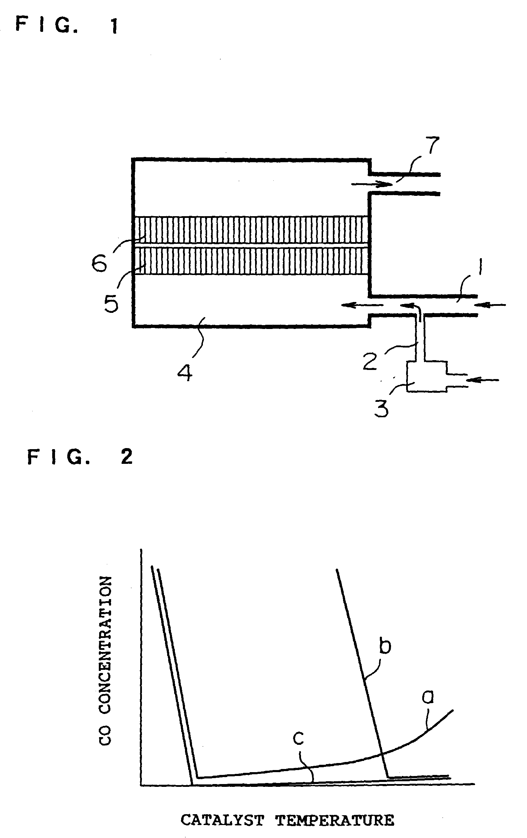

Fig. 1 is a schematic view illustrating the configuration of a hydrogen purifying apparatus in accordance with this embodiment. The hydrogen purifying apparatus shown in Fig. 1 includes a CO removing catalyst layer comprising a first catalyst layer 5 and a second catalyst layer 6. A reformed gas supplied from a reformed gas supplying unit 1 is fed to a reaction chamber 4 together with air supplied from an oxidant gas supplying unit 2 through a pump 3.

The oxidant gas supplying unit 2 supplies an oxidant gas so that the oxidant gas concentration becomes one to three times as large as the CO concentration. For instance, if the CO concentration is 1 vol%, air is supplied so that oxygen concentration becomes 1 to 3 vol%.

The mixed gas of the reformed gas and air first passes through the first catalyst layer 5. At the first catalyst layer 5, CO contained in the reformed gas is removed mainly by a reaction with oxygen.

The resulting gas, which has passed through the first catalyst layer 5, subsequently passes through the second catalyst layer 6. At the second catalyst layer 6, residual CO remaining in the mixed gas having passed through the first catalyst layer 5 is removed mainly by a reaction with hydrogen.

The resulting gas, which has passed through the second catalyst layer 6, is fed to a gas outlet 7.

The hydrogen purifying apparatus of this embodiment is suitable for the purification of reformed gases of which CO concentration is 0.1 to 1 vol%.

Preferred catalyst for use in the first catalyst layer 5 selectively facilitates the reaction:

$$2CO + O_2 \rightarrow 2CO_2.$$

More specifically, a catalyst facilitating the oxidation of CO in a reformed gas exclusively or highly selectively rather than the oxidation of hydrogen in the reformed gas is preferred. Examples of such preferred catalyst are metals such as Pt, Pd, Rh and Ru. These metals may be used either alone or in combination of two or more. A particularly preferred catalyst for use in the first catalyst layer 5 comprises at least one selected from the group consisting of Pt and Pd.

Preferred catalyst for use in the second catalyst layer 6 selectively facilitates the reaction:

$$CO + 3H_2 \rightarrow CH_4 + H_2O.$$

More specifically, a catalyst facilitating the hydrogenation of CO in a reformed gas exclusively or highly selectively rather than the hydrogenation of $CO_2$ in the reformed gas is preferred. Examples of such preferred catalyst are metals such as Ru, Rh, Pd and Ni. These metals may be used either alone or in combination of two or more. A particularly preferred catalyst for use in the second catalyst layer 6 comprises at least one selected from the group consisting of Ru, Rh and Ni.

Each of the first catalyst layer 5 and the second catalyst layer 6 preferably comprises a carrier which can carry the foregoing metals thereon in a highly dispersed state. In this case, the respective catalyst layer preferably comprises 100 parts by weight of the carrier and 0.1 to 10 parts by weight of at least one of the foregoing metals.

Examples of such carrier are $Al_2O_3$, $SiO_2$, $SiO_2$-$Al_2O_3$, MgO, $TiO_2$ and zeolite. Zeolite for use in the present invention includes A-type zeolite, X-type zeolite, Y-type zeolite, β-type zeolite, mordenite and ZSM-5. These carriers may be used either alone or in combination of two or more. Among them, $Al_2O_3$ and zeolite are preferable.

Particularly it is preferable that the first catalyst layer comprises at least one selected from the group consisting of Pt and Pd, and at least one selected from the group consisting of $Al_2O_3$ and zeolite.

It is also particularly preferable that the second catalyst layer comprises at least one selected from the group consisting of Ru, Rh and Ni, and at least one selected from the group consisting of $Al_2O_3$, $SiO_2$, $SiO_2$-$Al_2O_3$, MgO, $TiO_2$ and zeolite.

As to the first catalyst layer and/or the second catalyst layer, respective carrier and catalyst carried thereon are preferably supported on a substrate in the form of honeycomb or a foamed substrate with three-dimensionally communicating pores to secure a sufficient contact between the catalyst and the gas in the reaction chamber.

Such a substrate in the form of honeycomb (hereinafter referred to as "honeycomb substrate") and a foamed substrate with communicating pores preferably have a cell density of 7 to 140 cells/cm$^2$.

Examples of preferred material for each substrate are heat-resistant inorganic materials such as cordierite, metals such as stainless steel, and inorganic materials having high thermal conductivity such as SiC. These materials enable effective dissipation of reaction heat and hence inhibit a rise in temperature even if a reformed gas is supplied at a high flow rate, thus leading to stabilized purification of the reformed gas. Among these materials, metals and inorganic materials having high thermal conductivity are particularly preferable.

Example of preferred substrate is a honeycomb substrate made of cordierite. The catalyst may be in the form of pellet.

Each of the first catalyst layer and the second catalyst layer has a thickness selected depending on factors such as the CO concentration of a reformed gas and the reaction temperature. The thickness of each layer is selected so that the CO concentration of a reformed gas having passed through the first catalyst layer may become 1 to 1000 ppm, and the CO concentration of a reformed gas having passed through the second catalyst layer may become 0.01 to 100 ppm, preferably 0.01 to 20 ppm.

The first catalyst layer 5 and the second catalyst layer 6 are preferably separated from each other to make the manufacture of the hydrogen purifying apparatus easier and prevent respective catalysts for the first catalyst layer and the second catalyst layer from being mixed with each other.

In Fig. 1, the first catalyst layer 5 and the second catalyst layer 6 in the CO removing catalyst layer are separated from each other. The first catalyst layer 5 using a honeycomb substrate is located upstream, while the second catalyst layer 6 using a honeycomb substrate located downstream.

The first catalyst layer 5 and the second catalyst layer 6, however, are not necessarily separated from each other. For example, simply, respective catalysts in the form of pellet for the first catalyst layer and the second catalyst layer may be filled into the reaction chamber in order. Alternatively, a honeycomb substrate having a catalyst for the first catalyst layer on the upstream side thereof and having a catalyst for the second catalyst layer on the downstream side thereof is available.

Fig. 2 shows the relation between the catalyst temperature and the CO concentration of a reformed gas having passed through the CO removing catalyst layer in the following three cases; (a) the first catalyst layer was used alone in the CO removing catalyst layer, (b) the second catalyst layer was used alone in the CO removing catalyst layer, and (c) the first and the second catalyst layers were serially disposed in the CO removing catalyst layer.

Throughout the three cases, the same reaction condition was employed, except that the CO removing catalyst layer was changed. The oxidant gas supplying unit 2 supplied oxidant gas in an amount of two to six times as large as the amount of oxidant gas required for the stoichiometric oxidation of CO in the reformed gas.

In the measurement, the first catalyst layer comprised 100 parts by weight of $Al_2O_3$, 5 parts by weight of Pt dispersed on the $Al_2O_3$ and a honeycomb substrate made of cordierite having the $Al_2O_3$ with Pt thereon.

The second catalyst layer comprised 100 parts by weight of $Al_2O_3$, 5 parts by weight of Ru dispersed on the $Al_2O_3$ and a honeycomb substrate made of cordierite having the $Al_2O_3$ with Ru thereon.

As shown in Fig. 2, when the first catalyst layer 5 was used alone, CO in the reformed gas was selectively oxidized to lower the CO concentration to several ppm temporarily. Thereafter, a reverse shift reaction occurred between carbon dioxide and hydrogen whereby the CO concentration was raised exponentially with a rising temperature. This means that the temperature range allowing an effective reduction in CO concentration is only tens of degrees in centigrade. However, since the catalyst temperature is raised by reaction heat, it is difficult to maintain the catalyst temperature within such a limited range as small as tens of degrees in centigrade.

Also, when the second catalyst layer 6 was used alone, the CO concentration was lowered to several ppm in a relatively high temperature zone. This is because Ru facilitates methanation of CO in the temperature zone. However, methanation of carbon dioxide also proceeds exponentially with a rising temperature, thereby reducing the hydrogen concentration to lower the efficiency in a fuel cell system.

In this case, therefore, the temperature range allowing the methane concentration of the reformed gas to be maintained to 1 to 2 vol% or lower is only tens of degrees in centigrade. Nevertheless, since the methanation of carbon dioxide is also an exothermic reaction which raises the catalyst temperature, it is difficult to maintain the catalyst temperature within such a limited range as small as tens of degrees in centigrade.

In contrast, when the first catalyst layer 5 and the second catalyst layer 6 were disposed serially, the CO concentration of the reformed gas was lowered in a wider catalyst temperature range.

The temperature range allowing the first catalyst layer 5 to reduce the CO concentration to several ppm is only tens of degrees in centigrade. However, the temperature range allowing the first catalyst layer to reduce the CO concentration to hundreds of ppm is about one hundred of degrees in centigrade. On the other hand, the second catalyst layer does not function practically for a reformed gas having a CO concentration as high as about 0.5 to 1 vol% when the catalyst temperature is out of the foregoing limited range as small as tens of degrees in centigrade. However, when the CO concentration is as low as hundreds of ppm, the second catalyst layer 6 can reduce the CO concentration to several ppm or lower within a wider temperature range up to one hundred of degrees in centigrade.

For this reason, in the case (c), the CO concentration was reduced to hundreds of ppm at the first catalyst layer 5, then to several ppm at the second catalyst layer 6 within a wider temperature range. In short, the temperature range allowing effective removal of CO is not lower than the temperature at which the first catalyst layer 5 can reduce the CO concentration to hundreds of ppm, and lower than the temperature at which methanation of carbon dioxide at the second catalyst layer 6 proceeds to such an extent as to affect the efficiency of the fuel cell system.

Though depending on the catalysts used, a preferable temperature range is generally 60 to 350°C, preferably 80 to 250°C.

EMBODIMENT 2

This embodiment is directed to a hydrogen purifying apparatus in which a certain space is provided between the first catalyst layer and the second catalyst layer, and a heat- dissipating means or a cooling means is provided in the space.

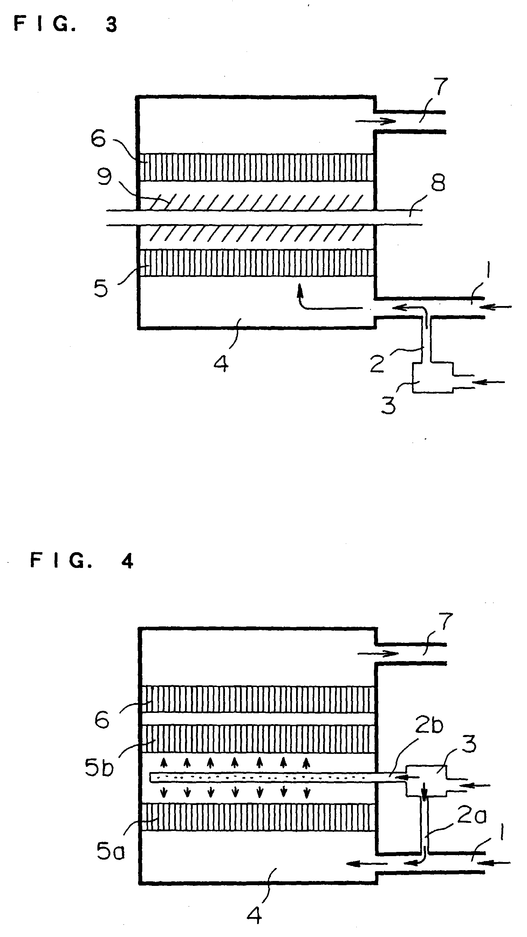

Fig. 3 is a schematic view illustrating the configuration of the hydrogen purifying apparatus in accordance with this embodiment. As shown in Fig. 3, the certain space between the first catalyst layer 5 and the second catalyst layer 6 accommodates therein a cooling water supplying tube 8 having heat-exchanging fins 9. Since other features of this embodiment are similar to corresponding features of EMBODIMENT 1, description will be made mainly about different features from EMBODIMENT 1.

Oxidation reaction between CO and hydrogen occurs at the first catalyst layer 5, and the heat generated by this reaction raises the temperature of the first catalyst layer 5. This causes the temperature of the second catalyst layer 6 also to be raised and the methanation of carbon dioxide to be facilitated.

However, the cooling means in the certain space between the first catalyst layer 5 and the second catalyst layer 6 as shown in Fig. 5 enables heat dissipation from the CO removing catalyst layer, thereby making it possible to maintain the temperature of the CO removing catalyst layer to 80 to 250°C. As a result, methanation of carbon dioxide at the second catalyst layer 6 is inhibited and hence the efficiency of the fuel cell system is improved.

Although the cooling water supplying tube 8 having the heat-exchanging fins 9 is illustrated as the heat dissipating means or the cooling means in Fig. 3, any alternative means may be used. For example, a fuel serving as a starting material of a reformed gas or water vapor may be circulated in the tube 8 to cool the CO removing catalyst layer and at the same time preheat the fuel or water vapor. Alternatively, simply a sufficient space may be provided between the first catalyst layer and the second catalyst layer to allow heat dissipation from the outer wall of the reaction chamber.

EMBODIMENT 3

This embodiment is directed to a hydrogen purifying apparatus in which a first catalyst layer comprises a plurality of layers, the hydrogen purifying apparatus further comprising an oxidant gas supplying unit for supplying oxidant gas to each of the layers. Description will be made mainly about features different from EMBODIMENT 1.

To make a fuel cell system compact, the volume of a CO removing catalyst layer for reacting CO with water vapor should be reduced, or the CO removing catalyst layer should be omitted. In such a case, the CO concentration is likely to be high and hence a first catalyst layer comprising only one layer is incapable of removing CO sufficiently.

Further, there is the limitation of the amount of air to be supplied to the first catalyst layer at a time in view of reaction heat and safety. However, when the CO concentration is high, an oxidant gas concentration higher than the upper limit is required.

In this embodiment, the first catalyst layer comprises a plurality of layers, preferably two or three layers. Each of these layers is provided with an oxidant gas supplying unit for supplying oxidant gas to the upstream side thereof. Therefore, it is possible to supply oxidant gas to the first catalyst layer two or more times. Consequently effective removal of CO is possible when the CO concentration is relatively high. Thus, the hydrogen purifying apparatus in accordance with this embodiment is suitable for purification of a reformed gas of which the CO concentration is 1 to 3 vol%.

Fig. 4 is a schematic view illustrating the configuration of an exemplary hydrogen purifying apparatus in accordance with this embodiment. As shown in Fig. 4, the first catalyst layer comprises two layers, i.e., first catalyst layer A referred to as "5a", and first catalyst layer B referred to as "5b", and between the two layers a second oxidant gas supplying unit 2b is provided. Preferably, an oxidant gas is supplied from a first oxidant gas supplying unit 2a so that the oxidant gas concentration of the overall gas becomes 1 to 2 vol%, and supplied from the second oxidant gas supplying unit 2b so that the oxidant gas concentration of the overall gas becomes 1 to 2 vol%.

When the CO concentration is high, the amount of oxidant gas supplied from the first oxidant gas supplying unit 2a is insufficient and the oxidation of CO in a reformed gas passing through the first catalyst layer A does not proceed sufficiently. However, oxidant gas is supplied again from the second oxidant gas supplying unit 2b to facilitate oxidation of CO at the first catalyst layer B, thereby reducing the CO concentration to hundreds of ppm. After the reformed gas passes through the second catalyst layer 6, the CO concentration thereof is reduced to several ppm.

The hydrogen purifying apparatus of the present invention will be more specifically described based on the following examples.

EXAMPLE 1

A catalyst powder comprising 100 parts by weight of $Al_2O_3$ and 5 parts by weight of Pt dispersed on the $Al_2O_3$ was prepared. The catalyst powder was applied on a honeycomb substrate made of cordierite having a diameter of 100 mm and a length of 50 mm to form a first catalyst layer.

Further, a catalyst powder comprising 100 parts by weight of $Al_2O_3$ and 5 parts by weight of Ru dispersed on the $Al_2O_3$ was prepared. The catalyst powder was applied on a honeycomb substrate made of cordierite having a diameter of 100 mm and a length of 50 mm to form a second catalyst layer.

The obtained first catalyst layer and the obtained second catalyst layer were placed in the reaction chamber of a hydrogen purifying apparatus as shown in Fig. 1. A reformed gas comprising 1 vol% of CO. 15 vol% of carbon dioxide, 15 vol% of water vapor, and hydrogen of 69 vol% was introduced into the hydrogen purifying apparatus at a rate of 10 liters per minute from a reformed gas supplying unit. The reformed gas had been cooled to predetermined temperatures shown in TABLE 1 before reaching the reformed gas supplying unit.

Air was supplied from an oxidant gas supplying unit so that oxygen concentration of the overall gas became 2 vol%.

The composition of a purified gas discharged from a gas outlet was determined using gas chromatography after removal of water vapor therefrom. The CO concentration and the methane concentration of the gas were then calculated. The results are shown in TABLE 1.

TABLE 1

| REFORMED GAS TEMPERATURE | 80°C | 100°C | 150°C | 200°C | 250°C |
|---|---|---|---|---|---|
| CO CONCENTRATION (ppm) | 50 | 0.1 | 0.3 | 1.5 | 3 |
| METHANE CONCENTRATION (%) | 0 | 0 | 0.05 | 0.2 | 1 |

EXAMPLE 2

The same operations as in EXAMPLE 1 were performed except that a cooling water supplying tube having heat-exchanging fins was provided between the first catalyst layer and the second catalyst layer as shown in Fig. 3. The results are shown in TABLE 2.

TABLE 2

| REFORMED GAS TEMPERATURE | 80°C | 100°C | 150°C | 200°C | 250°C |
|---|---|---|---|---|---|
| CO CONCENTRATION (ppm) | 60 | 0.1 | 0.25 | 1.2 | 1.5 |
| METHANE CONCENTRATION (%) | 0 | 0 | 0.03 | 0.1 | 0.2 |

EXAMPLE 3

A first catalyst layer comprising two layers, namely a first catalyst layer A and a first catalyst layer B was used. Between the two layers was provided a second oxidant gas supplying unit. A reformed gas comprising 2 vol% of CO, 14 vol% of carbon dioxide, 15 vol% of water vapor, and 69 vol% of hydrogen was introduced into the hydrogen purifying apparatus at a rate of 10 liters per minute from a reformed gas supplying unit. Air was supplied from the first and second oxidant gas supplying unit so that the respective oxygen concentration of the overall gas before passing through the first catalyst layer A and B become 2 vol%. Other operations were the same as in EXAMPLE 1. The results are shown in TABLE 3.

TABLE 3

| REFORMED GAS TEMPERATURE | 80°C | 100°C | 150°C | 200°C | 250°C |
|---|---|---|---|---|---|
| CO CONCENTRATION (ppm) | 300 | 0.1 | 0.03 | 1.5 | 3 |
| METHANE CONCENTRATION (%) | 0 | 0 | 0.05 | 0.2 | 1 |

EXAMPLE 4

The same operations as in EXAMPLE 1 were performed except that Rh was used instead of Ru in the second catalyst layer. The results are shown in TABLE 4.

TABLE 4

| REFORMED GAS TEMPERATURE | 80°C | 100°C | 150°C | 200°C | 250°C |
|---|---|---|---|---|---|
| CO CONCENTRATION (ppm) | 60 | 0.1 | 0.25 | 1.2 | 3 |
| METHANE CONCENTRATION (%) | 0 | 0 | 0.05 | 0.25 | 0.9 |

EXAMPLE 5

The same operations as in EXAMPLE 1 were performed except that Ni was used instead of Ru in the second catalyst layer. The results are shown in TABLE 5.

TABLE 5

| REFORMED GAS TEMPERATURE | 80°C | 100°C | 150°C | 200°C | 250°C |
|---|---|---|---|---|---|
| CO CONCENTRATION (ppm) | 70 | 0.15 | 0.5 | 2 | 5 |
| METHANE CONCENTRATION (%) | 0 | 0 | 0.1 | 0.5 | 1.1 |

COMPARATIVE EXAMPLE 1

The same operations as in EXAMPLE 1 were performed except that the second catalyst layer was omitted. The results are shown in TABLE 6.

TABLE 6

| REFORMED GAS TEMPERATURE | 80°C | 100°C | 150°C | 200°C | 250°C |
|---|---|---|---|---|---|
| CO CONCENTRATION (ppm) | 300 | 5 | 50 | 200 | 500 |
| METHANE CONCENTRATION (%) | 0 | 0 | 0 | 0 | 1 |

COMPARATIVE EXAMPLE 2

The same operations as in EXAMPLE 1 were performed except that the first catalyst layer was omitted. The results are shown in TABLE 7.

TABLE 7

| REFORMED GAS TEMPERATURE | 80°C | 100°C | 150°C | 200°C | 250°C |
|---|---|---|---|---|---|
| CO CONCENTRATION (ppm) | 9900 | 9500 | 9000 | 10 | 3 |
| METHANE CONCENTRATION (%) | 0 | 0 | 0.06 | 0.2 | 1 |

As apparent from the results of the EXAMPLES and COMPARATIVE EXAMPLES, the CO removing catalyst layer of the present invention functions effectively in a wider temperature range. Thus, the hydrogen purifying apparatus of the present invention can remove CO from a reformed gas stably.

Although the present invention has been described in terms of the presently preferred embodiments, it is to be understood that such disclosure is not to be interpreted as limiting. Various alternations and modifications will no doubt become apparent to those skilled in the art to which the present invention pertains, after having read the above disclosure. Accordingly, it is intended that the appended claims be interpreted as covering all alternations and modifications as fall within the true spirit and scope of the invention.

**Claims**

1.   A hydrogen purifying apparatus for removing carbon monoxide from a reformed gas, comprising

a reaction chamber,
a reformed gas supplying unit for supplying said reformed gas into said reaction chamber,
an oxidant gas supplying unit for mixing an oxidant gas with said reformed gas,
a first catalyst layer through which a mixed gas of said reformed gas and said oxidant gas passes, and
a second catalyst layer through which said mixed gas having passed through said first catalyst layer passes.

2.   The hydrogen purifying apparatus in accordance with claim 1, wherein a catalyst of said first catalyst layer comprises at least one selected from the group consisting of Pt and Pd, and a catalyst of said second catalyst layer comprises at least one selected from the group consisting of Ru, Rh and Ni.

3. The hydrogen purifying apparatus in accordance with claim 2, wherein a carrier of said first catalyst layer comprises at least one selected from the group consisting of $Al_2O_3$ and zeolite, and a carrier of said second catalyst layer comprises at least one selected from the group consisting of $Al_2O_3$, $SiO_2$, $SiO_2$-$Al_2O_3$, MgO, $TiO_2$ and zeolite.

4. The hydrogen purifying apparatus in accordance with claim 1, wherein at least one of said first catalyst layer and said second catalyst layer comprises a catalyst, a carrier of said catalyst and a substrate having said catalyst and said carrier thereon, said substrate being in the form of honeycomb or foamed with communicating pores.

5. The hydrogen purifying apparatus in accordance with claim 4, wherein said substrate is made of a metal or an inorganic material having high thermal conductivity.

6. The hydrogen purifying apparatus in accordance with claim 1, wherein a certain space is provided between said first catalyst layer and said second catalyst layer.

7. The hydrogen purifying apparatus in accordance with claim 6, wherein said certain space accommodates a heat-dissipating means or a cooling means therein.

8. The hydrogen purifying apparatus in accordance with claim 1, wherein said first catalyst layer comprises a plurality of layers, and said hydrogen purifying apparatus further comprises an oxidant gas supplying unit for supplying oxidant gas to each of said layers.

9. The hydrogen purifying apparatus in accordance with claim 1, wherein said first catalyst layer and said second catalyst layer are integrated into one unit using a substrate in the form of honeycomb or a foamed substrate with communicating pores.

F I G. 1

F I G. 2

CATALYST TEMPERATURE

FIG. 3

FIG. 4